**Europäisches Patentamt**

(19) **European Patent Office**

**Office européen des brevets**

(11) Publication number: **0 001 158**
**B1**

(12) # EUROPEAN PATENT SPECIFICATION

(21) Application number: **78300266.0**

(22) Date of filing: **08.08.78**

(51) Int. Cl.³: **B 41 J 3/20, G 01 D 15/08, B 23 P 1/08**

(54) Electro-erosion print head assembly and method of manufacture thereof.

(30) Priority: **12.09.77 US 832133**

(43) Date of publication of application:
**21.03.79 Bulletin 79/6**

(45) Publication of the grant of the European patent:
**11.03.81 Bulletin 81/10**

(84) Designated Contracting States:
**DE FR GB**

(56) References cited:
**FR - A - 2 216 876**
**FR - A - 2 270 562**
**FR - A - 2 339 839**
**DE - A - 2 640 048**
**US - A - 4 013 158**

(73) Proprietor: **International Business Machines Corporation**
**Armonk, N.Y. 10504 (US)**

(72) Inventor: **Uberbacher, Edward Charles**
**8707 Cliff Top Court**
**Raleigh North Carolina, 27612 (US)**

(74) Representative: **Petersen, Richard Courtenay**
**IBM United Kingdom Patent Operations Hursley Park**
**Winchester Hants. SO21 2JN (GB)**

Courier Press, Leamington Spa, England.

Electro-erosion print head assembly and method of manufacture thereof

This invention relates to electro-erosion print head assemblies and methods of manufacture thereof.

The manufacture of electro-erosion print heads has usually involved the use of printed circuit techniques. These techniques require artwork to establish the closely spaced electrically conductive lines forming the electrodes. These electrodes are usually formed near the edge of a circuit card or board from which electrical connections can be made. There are certain space limitations introduced by the artwork which limit the density of the electrodes.

The present invention is concerned with an electro-erosion head assembly manufactured from a set of laminae of thin electrically conductive material.

In the prior art, exemplified by DE - A - 26 40 048, and FR - A - 2 339 839, it has been proposed to provide an electro-erosion print head assembly comprising a set of laminae of thin electrically conductive material, each with an electrode extending from one edge of the lamina, a connector tab extending from another edge of the lamina, and a thin coat of insulation material except on the connector tab and the end surfaces of the electrodes, the laminae being stacked and secured together with the electrodes located to form a multi-electrode head and the connector tabs being spaced along the respective lamina edges.

According to the present invention, such an electro-erosion print head assembly is characterised in that each lamina has a series of electrodes extending from its one edge to form, with the corresponding electrodes of the other laminae, multi-electrode heads which are so disposed that any one at a time may be brought into operative position.

An important advantage is that the assembly may include more than one head without substantially increasing the manufacturing cost.

The connector tabs on adjacent laminae may be disposed at positions along the respective lamina edges, such as to form a stepped set of substantially equally spaced connector tabs as is known from DE - A - 26 40 048.

An advantage of this is that a practical connector fanout can be obtained by the spaced location of the connector tabs, each connector tab having the maximum amount of space for making an electrical connection thereto.

The width of each electrode within a head may be substantially the same, the centre lines of the electrodes of each head being aligned and the width of the electrodes of one head being different from the width of the electrodes of a second head.

Such an assembly enables printouts of different predetermined densities, as the individual heads give dots of a size corresponding to electrode width.

The widths of the electrodes in a head may be such that a head includes electrodes of different widths. With such an assembly, different printout characteristics may be provided by selection. In this arrangement the widths of the electrodes on each individual lamina are substantially the same, whereby a series of similar heads is provided.

Openings may be provided in the laminae between the electrodes and connector tabs, aligned to serve as bonding ports for encapsulation material. Such openings may also serve as identification cutouts.

The invention extends to a method of manufacturing an electro-erosion print head assembly according to the invention, which method comprises forming in each lamina a series of aligned openings defining therebetween material for electrodes connected to the main body of the lamina and to a selvedge strip connecting the ends of the electrodes, the sizes of the openings defining the sizes of the electrodes and their positions, forming in each lamina two further openings defining therebetween a connector tab and a selvedge strip at the end of the tab the size of the further openings defining the positions and size of the connector tab for individual laminae, coating each lamina with a thin coat of insulation material except on the connector tab, stacking the laminae so as to align the material of the electrodes into multi-electrode heads encapsulating the stack with an insulative encapsulation material and cutting the selvedge strips away at the ends of the electrodes and connector tab.

The method, according to the invention, may include grinding the encapsulation material down at the ends of the electrodes after cutting the selvedge strips away to align the ends of the electrodes. This ensures good electrical conductivity in printing.

In manufacture, prior to lamina insulation coating, the connector tab may be coated with resist, and subsequent to insulation coating, the resist is removed and the connector tab tin lead coated.

The claimed invention may be carried out in the ways described in detail below with reference to the accompanying drawings, in which:—

FIGURE 1 is a schematic diagram of an electro-erosion head assembly according to the invention;

FIGURE 2 is a perspective view of a lamina at an early stage in the method of manufacture according to the invention;

FIGURE 3 is a view, similar to Figure 2, at a later stage of manufacture;

FIGURE 4 is a schematic perspective view of a set of stacked laminae almost at the end of manufacture;

FIGURE 5 is a schematic representation of an alternative form of electro-erosion head assembly according to the invention;

FIGURE 6 is a schematic representation of yet another form of electro-erosion print head assembly according to the invention;

FIGURE 7 is a view, to an enlarged scale, of the end faces of the electrodes of a head in the assembly of Figure 6;

FIGURE 8 is a schematic representation of an electro-erosion print head assembly according to the invention in a printing apparatus; and

FIGURE 9 is a schematic representation of another form of assembly according to the invention in another form of printing apparatus.

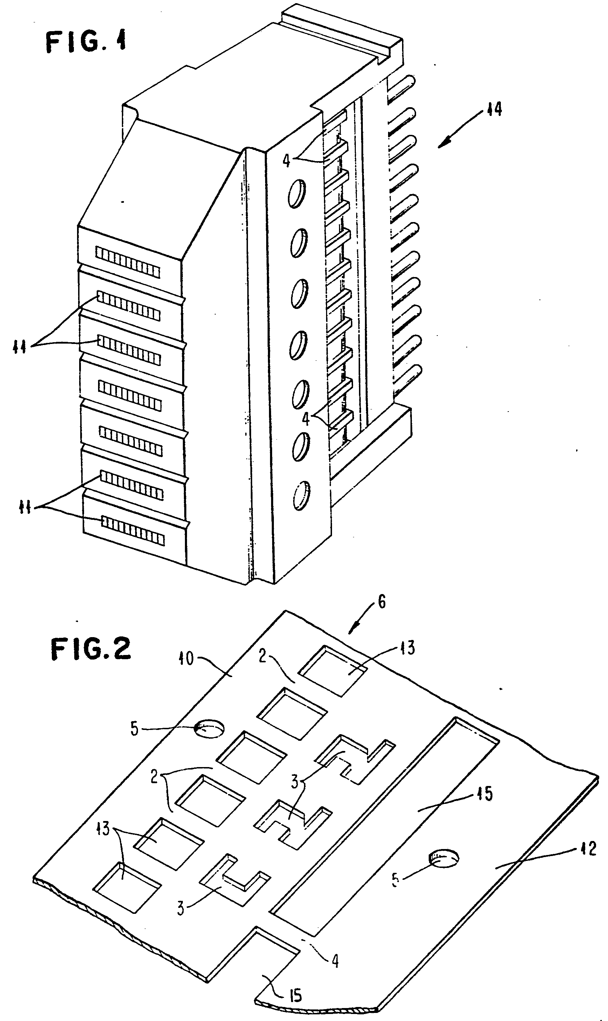

An electro-erosion print head assembly (Fig. 1) has seven heads 11, each of which has eleven adjacent electrically insulating electrodes, each with an exposed end face. In use, six of the seven heads are redundant and the assembly is moved to bring one head into print position when needed, for example, when another head becomes worn or, where the electrode sizes of the heads differ, to obtain different printing characteristics. By use of the invention, corresponding electrodes of the seven heads are electrically connected providing eleven arrays of electrodes, each array having seven separated electrodes, one for each head. Each electrode array has a connector tab 4 connected to a pin of an output connector 14. The number of heads in an assembly may vary, as may the number of arrays. The number of arrays determines the number of electrodes per head and the number of pins of the connector 14. The manufacturing process enables the pins of the connector to be separated and provides a multiple head assembly at practically the same cost as a single head assembly.

The multiple head assembly comprises a set of laminae of thin electrically conductive material, such as steel. The individual laminae of a set differ, as explained hereinafter, and each has a series of openings formed therein, for example by stamping or chemical milling. One lamina 6 (Fig. 2) has a series of aligned substantially square openings 13 formed therein close to one edge of the material of the lamina. The openings 13 define therebetween material for electrodes 2, leaving a selvedge strip 10 along the one edge of the lamina. The sizes of the openings 13 at similar positions in individual laminae of a set define the sizes of the electrodes 2. Two further rectangular openings 15 are formed in the lamina 6, close to the other edge of the material of the lamina. The openings 15 define therebetween material for a connector tab 14, leaving a selvedge strip 12 along the other edge of the lamina. The sizes of the further openings 15 in the individual laminae of a set define the positions and sizes of the connector tabs.

The selvedge strips provide the thin laminae with strength and stability and facilitate the manufacturing process. For example, the selvedge strips 10 and 12 contain openings 5 by means of which the laminae 6 are stacked in alignment during the manufacturing process. It will be appreciated that the widths of the electrodes 2 can be readily varied by controlling the dimensions of the openings 13. Thus the electrodes on a single lamina may differ in width or the electrodes on different laminae may differ in width. The sizes of the openings 15 in different laminae preferably differ, so that the connector tabs 4 can be located at different positions. In a preferred method of manufacture, each lamina configuration is stamped from a long sheet of thin steel of 0.127 mm thickness and the openings 15 controlling the position of the connector tab 4 are progressively varied to give a different position for the tab 4 for each array lamina 6. Additional openings 3 in the centre of the lamina 6 are used for a later potting or encapsulation step in the process, but can also be used for identification purposes.

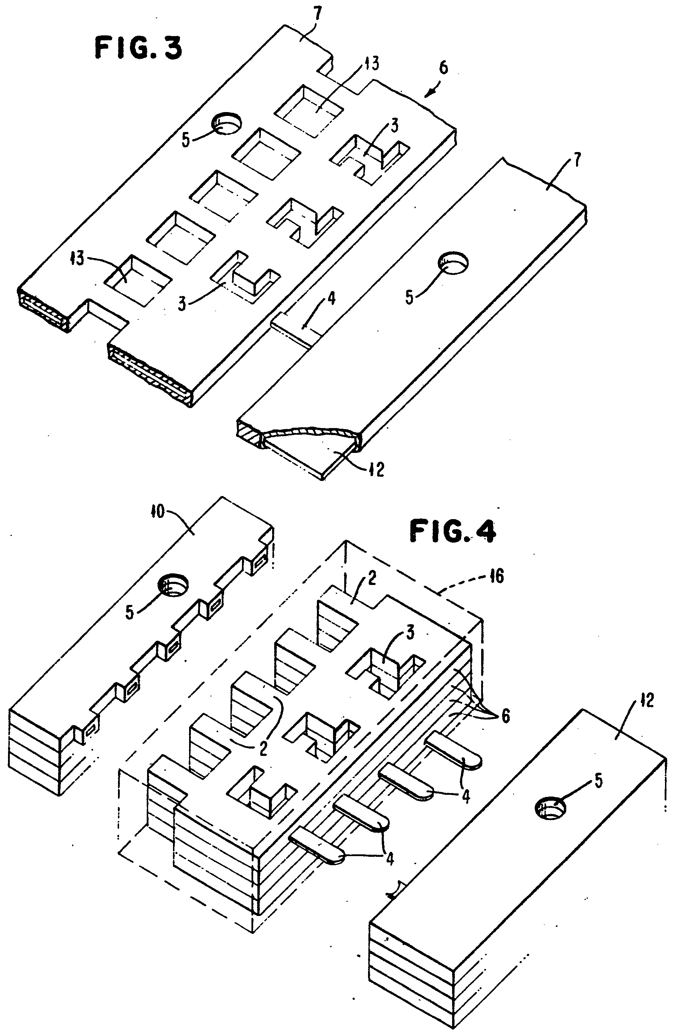

The stamped out lamina 6 is then cut to length, leaving the required number of electrodes 2 connecting the selvedge strip 10 to the centre and the connector tab 4 connecting the centre to the selvedge strip 12. Resist is applied over the surfaces of the material forming the tab 4 and the lamina 6 is coated with a thin 0.127 mm coating of insulation material 7 (Fig. 3), preferably by electro-fluoridic application. The resist is removed from the connector tab 4, which is then tin-lead plated in preparation for soldering.

A set of insulated laminae 6, whose tabs are in different positions, is stacked using the holes 5 for alignment purposes, the number of laminae being equal to the number of electrodes in each head. The alignment is such as to bring the material of the electrodes 2 of the set to laminae into alignment as sets of electrodes of the heads. The stacked laminae are then encapsulated as a unit in a plastic-like potting compound 16 (Fig. 4). The encapsulation does not include the connector tabs 4 but does include the electrodes 2. When potting is complete, the selvedge strips 10 and 12 are cut away at the ends of the electrodes 2 and at the ends of the connector tabs 4, respectively. Next, the potting compound surface containing the electrode ends is ground down. Grinding is stopped once the end surfaces of the electrodes 2 are exposed. Although a stack of only four laminae is shown in Fig. 4, it will be appreciated that any number of insulated laminae 6 can be stacked and potted, depending on the required number of electrodes 2 per head. The tabs 4 have a different location for each of the stacked laminae 6. Accordingly, when the laminae 6 are stacked, the connector tabs 4 are sufficiently spaced from one another to provide the required space for solder connections thereto.

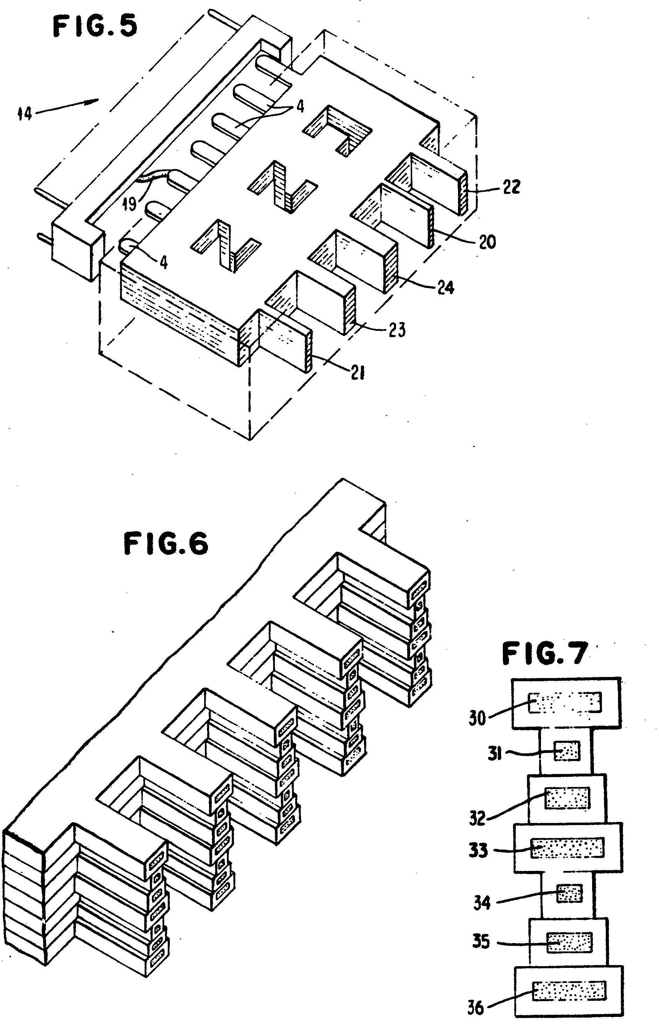

Fig. 5 shows a potted stack of laminae for an electro-erosion print head assembly in which the electrodes in each head are of the same width, and the electrodes in different heads have a different width, thereby providing a different printing size in accordance with the head selection. This is achieved by making the openings 13 of different sizes in a lamina, but providing the same size series of openings 13 in all laminae. As shown, the electrodes 20, 21, 22, 23 and 24 are in ascending order of width. The electrodes 20 are narrowest and are located between electrodes 22 and 24 of thicker widths. This reduces the chances of damage during manufacture. One connector tab 4 is shown connected by a soldered lead 19 to a connector 14.

Fig. 6 shows a stack of insulated laminae for an electro-erosion head assembly in which the electrodes of each head are of different widths.

As shown in Fig. 7 there are seven electrodes 30, 31, 32, 33, 34, 35 and 36 in each head. Electrodes 30, 33 and 36 are of the same width and wider than the other electrodes. Electrodes 31 and 34 are of the same width and narrower than the other electrodes. Electrodes 32 and 35 are of the same width. Such an arrangement of various width electrodes within the same head may be used to produce gray tones.

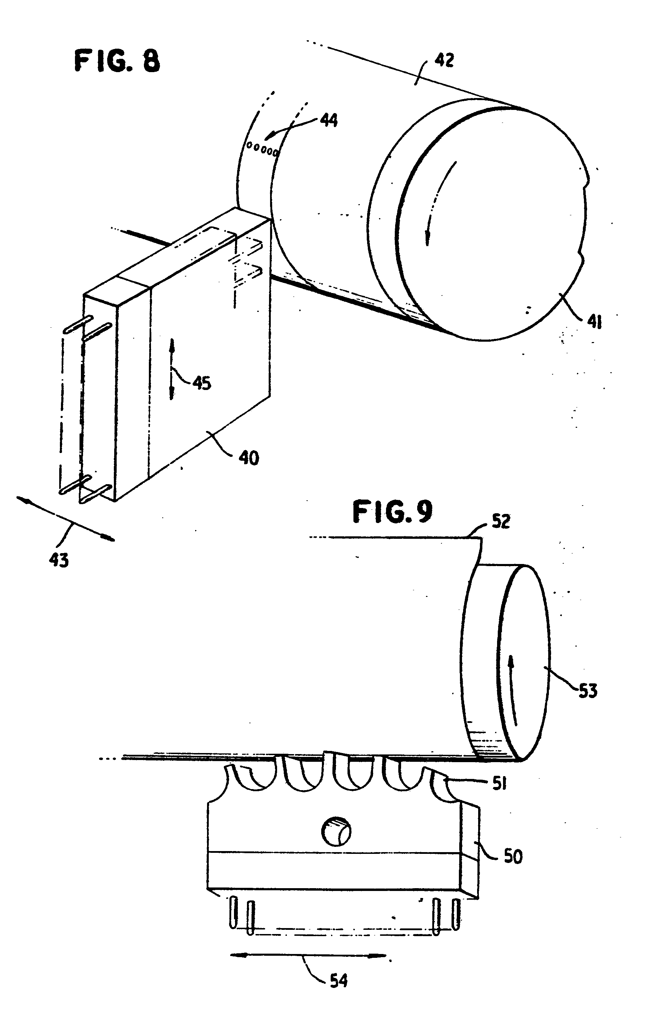

An electro-erosion print head assembly 40 (Fig. 8) manufactured by the method according to the invention may be mounted for operation adjacent a rotating drum 41 on which is secured a sheet of paper 42. The assembly 40 is reciprocable in the direction of the arrows 43 parallel to the rotational axis of the drum 41 to position the assembly in alignment with an area 44 on the paper upon which electro-erosion printing is to be effected. The assembly 40 is also movable in steps in the direction of the arrows 45 perpendicular to the rotational axis of the drum 41 to bring a selected head into print position. The individual electrodes of a head in the print position may be energised selectively at appropriate times to effect electro-erosion printing in the area 44. The assembly 40 may then be moved in the direction of the arrows 43 to present the head to another area for further printing. The close spacing of the electrodes in a head achieved by the use of the invention, enables printing to take place with a high spot density.

A lower spot density of printing, if acceptable, may be achieved by selecting some only of the electrodes of a head, for example alternate electrodes. This may require less computer storage space and be faster to produce. Different sizes of spot may be produced by the use of different sized electrodes in the head shown in Fig. 7. When one head becomes worn, another may be selected by indexing the assembly 40 in the direction of the arrows 45 to present a new head in the print position. If the assembly is one such as shown in Fig. 5, different heads may be presented in the print position to produce different sized spots.

Instead of the assembly 40 being movable, the drum 41 may be movable relative to the assembly 40 to achieve the same results.

In the head assemblies thus far described, the faces of the electrodes of all the heads lie in a common plane. This is not essential and they may, for example, lie in a common cylindrical surface, as shown in Fig. 9. In the manufacture of such a head assembly 50, the openings defining therebetween material for electrodes 51 are so shaped that the resultant electrodes are disposed on radii having a common centre. The potting compound surface containing the electrode ends is ground on a cylindrical surface on whose central axis lie the common centres of the electrode axes of the laminae.

The head assembly 50 is then mounted for pivotation about the central axis of the ground surface to present a selected head to paper 52 on a platen 53. The assembly 50 may be mounted as shown or at right angles thereto to present a head parallel to the rotation axis of the platen 53. The assembly 50 may be reciprocable in the direction of the arrows 54 parallel to the rotation axis of the platen 53 or the platen 53 may be reciprocable relative to the head assembly 50. The platen 53 may be rotatable in steps to present a print line area of the paper 52 to a head in the print position. An electro-erosion print head assembly according to the invention may be used in other forms of electro-erosion print apparatus.

**Claims**

1. An electroerosion print head assembly comprising a set of laminae of thin electrically conductive material, each with an electrode extending from one edge of the lamina, a connector tab extending from another edge of the lamina, and a thin coat of insulation material except on the connector tab and the end surfaces of the electrodes, the laminae being stacked and secured together with the electrodes located to form a multielectrode head and the connector tabs being spaced along the respective lamina edges, characterised in that each lamina (6) has a series of electrodes (2) extending from its one edge to form, with the corresponding electrodes of the other laminae, multielectrode heads (11) which are so disposed that any one at a time may be brought into operative position.

2. An assembly according to claim 1, in which the connector tabs (4) on adjacent laminae (6) are disposed at positions along the respective lamina edges, such as to form a stepped set of substantially equally spaced connector tabs.

3. An assembly according to claim 1 or 2, in which the width of each electrode within a head (11) is substantially the same, the centre lines of the electrodes of each head are aligned and the width of the electrodes of one head is different from the width of the electrodes of a second head (Figs. 4 and 5).

4. An assembly according to claim 1 or 2, in which the widths of the electrodes (30 to 36) in a head are such that a head includes electrodes of different widths (Figs. 6 and 7).

5. An assembly according to claim 4, in which the widths of the electrodes on each individual lamina are substantially the same, whereby a series of similar heads is provided (Figs. 4 and 6).

6. An assembly according to any preceding claim in which openings (3) are provided in the laminae between the electrodes and connector tabs, aligned to serve as bonding ports for encapsulation material (16).

7. A method of manufacturing an electroerosion print head assembly according to any preceding claim, comprising forming in each lamina (6) a series of aligned openings (13) defining therebetween material for electrodes (2) connected to the main body of the lamina and to a selvedge strip (7) connecting the ends of the electrodes, the sizes of the openings (13) defining the sizes of the electrodes and their positions, forming in each lamina two further openings (15) defining therebetween a connector tab (4) and a selvedge strip (12) at the end of the tab, the size of the further openings (15) defining the positions and size of the connector tab for individual laminae, coating each lamina with a thin coat (7) of insulation material except on the connector tab (4), stacking the laminae so as to align the material of the electrodes into multielectrode heads (11), encapsulating the stack with an insulative encapsulation material (16), and cutting the selvedge strips (7, 12) away at the ends of the electrodes and connector tab.

8. A method according to claim 7, including grinding the encapsulation material down at the ends of the electrodes (2) after cutting the selvedge strips away to align the ends of the electrodes.

9. A method according to claim 7 or 8, in which, prior to lamina insulation coating, the connector tab (4) of each lamina is coated with resist, and subsequent to insulation coating, the resist is removed and the connector tab tin lead coated.

## Patentansprüche

1. Schreibkopf-Baugruppe für einen Elektro-Erosionsdrucker mit einem Satz von Plättchen dünnen elektrisch leitenden Materials, von denen jedes Plättchen randwärts mit einer Elektrode und an anderer Stelle randwärts mit einem Verbindungsanschluß sowie einer dünnen Schicht isolierenden Materials — ausgenommen der Verbindungsanschluß und die Endflächen der Elektroden — versehen ist, wobei die Plättchen zusammen mit den Elektroden aufeinander geschichtet und fixiert sind zur Bildung eines Mehrfach-Elektrodenkopfes und die Verbindungsanschlüsse entlang der betreffenden Plättchenränder mit einem Abstand voneinander angeordnet sind, dadurch gekennzeichnet, daß jedes Plättchen (6) eine Reihe von sich randwärts erstreckenden Elektroden (2) aufweist, welche mit den entsprechenden Elektroden der anderen Plättchen Mehrfach-Elektrodenköpfe (11) bilden, die so angeordnet sind, daß jeweils einer von ihnen in Arbeitsstellung gebracht werden kann.

2. Baugruppe nach Anspruch 1, in welcher die Verbindungsanschlüsse (4) auf benachbarten Plättchen (6) entlang der entsprechenden Plättchenränder so angeordnet sind, daß sie einen abgestuften Satz von im wesentlich gleich beabstandeten Verbindungsanschlüssen bilden.

3. Baugruppe nach Anspruch 1 oder 2, in welcher die Breite jeder Elektrode in einem Kopf (11) im wesentlichen die gleiche ist und die Mittellinien der Elektroden jedes Kopfes aufeinander ausgerichtet sind und die Breite der Elektroden eines Kopfes von der Breite der Elektroden eines zweiten Kopfes (Fign. 4 und 5) abweicht.

4. Baugruppe nach Anspruch 1 oder 2, in welcher die Breiten der Elektroden (30 bis 36) in einem Kopf so sind, daß ein Kopf Elektroden verschiedener Breiten (Fign. 6 und 7) umfaßt.

5. Baugruppe nach Anspruch 4, in welcher die Breiten der Elektroden jedes einzelnen Plättchens im wesentlichen gleich sind, wobei eine Reihe von ähnlichen Köpfen vorgesehen ist (Fign. 4 und 6).

6. Baugruppe nach einem der vorstehenden Ansprüche, in welcher in den Plättchen zwischen den Elektroden und den Verbindungsanschlüssen Öffnungen vorgesehen sind, welche aufeinander ausgerichtet als Verbindungsöffnungen für Vergußmaterial (16) dienen.

7. Verfahren zur Herstellung einer Schreibkopf-Baugruppe für einen Elektro-Erosionsdrucker nach einem der vorstehenden Ansprüche, wobei in jedem Plättchen (6) eine Reihe mit einander fluchtender Öffnungen (13) gebildet wird, zwischen denen das Elektroden (2) material liegt, wobei die Elektroden (2) mit dem Hauptteil des Plättchens und mit einem Abfallstreifen (7) verbunden sind, der mit den Enden der Elektroden verbunden ist, wobei die Größe der Öffnungen (13) die Größe der Elektroden und ihre Lage definieren, wobei zwei weitere Öffnungen (15) in jedem Plättchen gebildet werden, zwischen denen ein Verbindungsanschluß (4) liegt, wobei ein Abfallstreifen (12) am Ende des Verbindungsanschlusses angeordnet ist und die Größe der weiteren Öffnungen (15) die Lage und die Größe der Verbindungsanschlüsse für die einzelnen Plättchen definieren, wobei jedes Plättchen mit Ausnahme des Verbindungsanschlusses (4) mit einer dünnen Schicht (7) isolierenden Materials beschichtet wird, wobei die Schichtung der Plättchen unter Ausrichtung des Elektrodenmaterials für Mehrfach-Elektrodenköpfe (11) erfolgt, wobei fernerhin der Schichtstapel mit einem isolierenden Material (16) vergossen wird, und wobei die Abfallstreifen (7 und 12) an den Enden der Elektroden und des Verbindungsanschlusses abgeschnitten werden.

8. Verfahren nach Anspruch 7, welches ein Abschleifen des Vergußmaterials an den Enden der Elektroden (2) nach dem Abschneiden der Abfallstreifen zur Ausrichtung der Elektrodenenden umfaßt.

9. Verfahren nach Anspruch 7 oder 8, wobei vor Aufbringung der Isolationsbeschichtung auf jedes Plättchen der Verbindungsanschluß (4) jedes Plättchens mit Photolack beschichtet wird und im Anschluß an die Isolationsbeschichtung der Photolack entfernt und der Verbindungsanschluß mit Zinn/Blei beschichtet wird.

**Revendications**

1. Elément d'impression par électro-érosion comportant un ensemble de lamelles minces en matériau électriquement conducteur dont chacune est pourvue d'une électrode s'étendant depuis l'un de ses bords et d'une patte de connexion s'étendant depuis un autre de ses bords, et est recouverte d'une mince couche d'un matériau isolant à l'exception de ladite patte de connexion et de l'extrémité de ladite électrode, lesdites lamelles étant empilées et fixées les unes aux autres, lesdites électrodes étant disposées de manière à former une tête à électrodes multiples et lesdites pattes de connexion étant espacées le long des bords correspondants des différentes lamelles, ledit élément d'impression étant caractérisé en ce que chaque lamelle (6) est pourvue, sur l'un de ses côtés, de plusieurs électrodes (2) constituant, avec les électrodes correspondantes des autres lamelles, des têtes (11) à électrodes multiples disposées de telle sorte que n'importe laquelle d'entre elles puisse être mise à un moment quelconque dans une position opérationnelle.

2. Elément d'impression selon la revendication 1, caractérisé en ce que les pattes de connexion (4) associées à des lamelles (6) adjacentes sont disposées de telle sorte, le long des bords des lamelles correspondantes, qu'elles soient séparées les unes des autres par des intervalles pratiquement égaux et décalées les unes par rapport aux autres.

3. Elément d'impression selon la revendication 1 ou 2, caractérisé en ce que les largeurs des électrodes d'une même tête (11) sont pratiquement identiques, en ce que les axes des électrodes de chaque tête sont confondus, et en ce que la largeur des électrodes d'une tête donnée diffère de celle des électrodes d'une autre tête (figures 4 et 5).

4. Elément d'impression selon la revendication 1 ou 2, caractérisé en ce que les électrodes (30 à 36) d'une tête donnée ont des largeurs différentes (figures 6 et 7).

5. Elément d'impression selon la revendication 4, caractérisé en ce que les largeurs des électrodes de chacune des lamelles sont pratiquement identiques, ce qui permet d'obtenir une série de têtes similaires (figures 4 et 6).

6. Elément d'impression selon l'une quelconque des revendications précédentes, caractérisé en ce que les lamelles comportent, entre les électrodes et les pattes de connexion, des ouvertures (3) alignées de telle sorte que leurs axes soient confondus et qui serviront d'ouvertures de liaison lors de l'application d'un matériau d'enrobage (16).

7. Procédé pour fabriquer un élément d'impression par électro-érosion selon l'une quelconque des revendications précédentes, caractérisé en ce qu'il consiste notamment à percer dans chaque lamelle (6) une série d'ouvertures (13) définissant entre elles des électrodes (2) reliées à ladite lamelle et à une bande latérale (7) qui sera ultérieurement coupée et qui relie entre elles les extrémités des électrodes, les dimensions et les positions de ces dernières étant définies par les dimensions des ouvertures (13), à percer dans chaque lamelle deux ouvertures supplémentaires (15) définissant entre elles une patte de connexion (4) et une bande latérale (12) qui sera ultérieurement coupée et qui se trouve à l'extrémité de ladite patte, les dimensions et la position de cette dernière étant définies par les dimensions desdites ouvertures supplémentaires (15), à recouvrir chaque lamelle d'une mince couche (7) d'un matériau isolant, exception faite de la patte de connexion (4), à empiler les lamelles de manière à aligner les électrodes pour constituer des têtes (11) à électrodes multiples, à enrober la pile de lamelles dans un matériau d'enrobage isolant (16), et à couper les bandes latérales (7, 12) pour les séparer des extrémités des électrodes et de la patte de connexion.

8. Procédé selon la revendication 7, caractérisé en ce qu'il consiste en outre à meuler le matériau d'enrobage de manière à exposer les extrémités des électrodes (2) après avoir coupé les bandes latérales pour aligner les extrémités des électrodes.

9. Procédé selon la revendication 7 ou 8, caractérisé en ce qu'avant de recouvrir les lamelles d'une couche d'un matériau isolant, on recouvre la patte de connexion (4) de chaque lamelle d'un matériau photo-résistant, ce dernier étant retiré après application dudit matériau isolant et ladite patte de connexion étant recouverte d'une couche d'un alliage d'étain et de plomb.

FIG. 1

4

14

4

11

11

FIG. 2

6

10

2

13

5

2

3

13

3

4

5

15

12

15

1

**FIG. 3**

**FIG. 4**

FIG.5

14

4

19

4

22

20

24

23

21

FIG.6

FIG.7

30

31

32

33

34

35

36

**FIG. 8**

**FIG. 9**